# EUROPÄISCHE PATENTSCHRIFT

(11) **EP 2 933 902 B1**
(45) Veröffentlichungstag und Bekanntmachung des Hinweises auf die Patenterteilung: **01.06.2016**
(21) Anmeldenummer: 14165103.4
(22) Anmeldetag: 17.04.2014
(51) Int. Cl.: H02K 1/20, H02K 9/06, H02K 9/20, H02K 3/24, H02K 5/128

(54) **Entwärmung einer elektrischen Maschine**
Cooling of an electric machine
Dissipation de la chaleur d'une machine électrique

(43) Veröffentlichungstag der Anmeldung: 21.10.2015
(73) Patentinhaber: Siemens Aktiengesellschaft, 80333 München (DE)
(72) Erfinder: Deeg, Christian, 90518 Altdorf (DE); Eichinger, Benjamin, 90459 Nürnberg (DE); Joseph, Eric, 90489 Nürnberg (DE); Scharf, Uwe, 90763 Fürth (DE); Scherer, Matthias, 90459 Nürnberg (DE); Stegherr, Michael, 90491 Nürnberg (DE); Weiß, Sebastian, 90522 Oberasbach (DE)

(56) Entgegenhaltungen:
- EP-A2- 0 039 493
- EP-A2- 2 058 926
- WO-A2-2012/159660
- DE-A1-102006 005 316
- DE-A1-102010 001 488
- DE-A1-102011 003 597
- US-A- 2 735 950
- US-A- 4 598 223
- US-A- 5 491 371
- US-A1- 2010 176 668

## Beschreibung

Die vorliegende Erfindung betrifft eine elektrische Maschine mit einem Rotor, welcher ein Rotorblechpaket aufweist. Zudem weist die elektrische Maschine einen Stator auf, welcher ein Statorblechpaket umfasst. Schließlich gehört zu der elektrischen Maschine noch ein Gehäuse, welches das Rotorblechpaket und das Statorblechpaket umgibt.

Bei der Umwandlung von elektrischer Energie in mechanische Energie in Elektromotoren entstehen Verluste in Form von Wärme. Diese Wärmeverluste müssen abgeführt werden, um eine Überhitzung oder eine Beschädigung der Maschine zu verhindern. Zudem kann die Abfuhr der Wärme zu einem besseren Wirkungsgrad führen. Die zusätzlichen Einrichtungen zur Wärmeabfuhr können wiederum zu Verlusten führen, wie bspw. bei Lüftern, bei denen Ventilationsverluste auftreten können.

Die Kühlung von Elektromotoren wird gängigerweise über Luft oder Wasser als wärmeabführendes Medium realisiert. Ist das wärmeabführende Medium Wasser, so ergeben sich im Gegensatz zu Luft andere Bauteile im Motor. Zum Teil muss ein für LuftKühlung konzipierter Motor sehr umständlich auf WasserKühlung umgebaut werden. Dies kann bis zu einem veränderten Blechschnitt des Aktivteils, also des Rotorblechpakets oder des Statorblechpakets, führen.

Bei bestimmten Betriebssituationen kann es im Wickelkopf des Aktivteils zur Relativbewegung zwischen den Leitern, z.B. durch Schwingungen, kommen. Ohne geeignete Maßnahmen kann durch das Aneinanderreiben der Leiter ihre Isolierung beschädigt werden, was zu einem Kurzschluss und letztlich zum Ausfall der Maschine führen kann. Zudem erfährt auch der Wickelkopf eine thermische Belastung durch Verluste.

Eine Form der Kühlung elektrischer Maschinen erfolgt durch die Kühlung über Rippen im Gehäuse der elektrischen Maschine. Dabei sitzt der Lüfter verdeckt unter der Lüfterhaube und fördert Luft zwischen die Kühlrippen über die elektrische Maschine. Der Stator, welcher über Trägerteile an dem Gehäuse fixiert ist, gibt seine Wärme über den Kontakt an das Gehäuse ab. Die großen Oberflächen der Rippen im Gussgehäuse dienen der Wärmeabgabe der vorbei streichenden Luft. Die Läufer- und Wickelkopfkühlung erfolgt über einen inneren Luftkreislauf. Im Innenkreislauf fördert ein zweiter Lüfter das Fluid durch den Läufer über die Wickelköpfe in Überströmkanäle im Gehäuse und über weitere Wickelköpfe wieder in den Läufer. Diese Form der Kühlung benötigt zwei Kühlkreisläufe.

Hierzu ist beispielsweise in der Druckschrift DE 188 25 92 A1 eine Anordnung zur Kühlung einer elektrischen Maschine beschrieben. Dabei weist die elektrische Maschine ein Blechpaket auf, welches aus Einzelblechpaketen zusammengesetzt ist, wobei an dem Blechpaket eine Vielzahl von unmittelbar am äußeren Umfang Kühlrippen angeordnet sind, die durch in einem gemeinsamen Schnitt mit den Einzelblechen ausgestanzte Ansätze gebildet sind.

In der Druckschrift US 5,491,371 ist eine elektrische Maschine mit einem Statorblechpaket beschrieben, wobei die Einzelbleche des Blechpakets Kühlrippen am Außenumfang des Statorblechpakets bilden.

Alternativ zur Luftkühlung kann eine Wasserkühlung eingesetzt werden. Dabei weist die elektrische Maschine an ihrem Gehäuse, im Bereich des Aktivteils, axial verlaufende Wasserkanäle in Umfangsrichtung auf. Diese Kanäle werden mit Wasser durchflutet, an welches das Aktivteil die Abwärme abgibt. Die Kühlung des Innenkühlkreislauf erfolgt nach dem gleichen Prinzip wie bei der Luftkühlung.

Dazu zeigt beispielsweise die Druckschrift DE 10 2010 001 488 A1 eine elektrische Maschine mit einem Wellenthermosiphon.

Die elektrische Maschine hat einen Stator, der durch einen Kühlkreislauf mit flüssigem Kühlmittel gekühlt wird. Der Rotor weist den Thermosiphon mit einem Verdampfer und mindestens einem Kondensator auf. Der Kondensator ist zur Kühlung an den Kühlkreislauf angeschlossen.

In der DE 10 2010 064 010 A1 ist eine elektrische Maschine beschrieben, welche einen Grundkörper und eine Rotorwelle aufweist, wobei der Grundkörper zumindest einen Ständer umfasst. Die Rotorwelle ist derart im Grundkörper gelagert, dass die Rotorwelle um eine Rotationsachse drehbar ist. Im Grundkörper sind Kühlkanäle für ein flüssiges Kühlmedium angeordnet.

Bei einer dritten Ausführungsform kann die elektrische Maschine entweder mit einer Luftkühlung oder mit einer Wasserkühlung ausgeführt werden. Bei der Ausführung in Luftkühlung wird von der Nichtantriebsseite über einen Lüfter Luft zwischen Gehäuse und Statorblechpaket geblasen. Da sich der Außenluftstrom innerhalb des Gehäuses befindet, muss der Wickelkopf mit einem sogenannten Schutzrohr gegen die Außenluft geschützt werden, um die geforderte Schutzart einzuhalten. Ein Innenkreislauf geht durch einen weiteren Lüfter über die Wickelköpfe in axiale Kanäle im Blechpaket, den axial gegenüberliegenden Wickelköpfen, durch den Läufer und Luftspalt wieder zum Lüfter.

Aus der Druckschrift WO 2012/159660 A2 geht eine dynamoelektrische Maschine mit einem selbsttragenden Gehäuse hervor, das einen Blechpaketabschnitt aufweist, wobei der Blechpaketabschnitt ein aus axial geschichteten Blechen gebildetes Blechpaket eines Stators aufnimmt, fixiert und zumindest teilweise umgibt, wobei die einzelnen Bleche eine äußere Grundform mit insbesondere achteckigem Querschnitt aufweisen mit einer Statorbohrung, die von radial angeordneten am Umfang der Statorbohrung gleichmäßig verteilten Nuten umgeben ist, einem radial daran anschließenden Jochrücken, der in äquidistanten Abstand zur Statorbohrung verläuft, axialen Ausnehmungen des Bleches in Bereichen zwischen Jochrücken und der äußeren Grundform der Bleche.

Aus der EP 2 058 926 A2 geht ein Motorkühlsystem hervor. Dabei umfasst eine Baugruppe für einen elektrischen Motor einen Wärmetauscher mit einer Mehrzahl von Rippen. Die Rippen definieren eine Mehrzahl von Kühlluftpassagen, die den Kühlluftströmungsverlauf stören, um die Bildung von Grenzschichten zu reduzieren und die Wärmeübertragung zu verbessern.

Aus der DE 10 2011 003 597 A1 geht eine elektrische Maschine mit effizienter Statorkühlung hervor. Die elektrische Maschine weist dabei einen Stator mit einem Statorblechpaket und einer im Statorblechpaket angeordneten Statorwicklung auf. Der Stator umgibt einen um eine Rotorachse rotierbaren Rotor radial außen. Das Statorblechpaket ist in einem Gehäuse der elektrischen Maschine unter Presssitz oder Formschluss gehalten. Das Statorblechpaket weist radial außen axial verlaufende Stege auf, sodass je zwei in tangentialer Richtung benachbarte Stege und das Gehäuse je einen Kühlkanal für ein Kühlmedium begrenzen. Das Gehäuse weist in einem eintrittsseitigen Endbereich des Statorblechpakets eintrittsseitige Ausnehmungen und an einem austrittsseitigen Endbereich des Statorblechpakets austrittsseitige Ausnehmungen auf, sodass das Kühlmedium durch die eintrittsseitigen Ausnehmungen radial außen in die Kühlkanäle eintritt, sodann axial durch die Kühlkanäle zu den austrittsseitigen Ausnehmungen strömt und schließlich durch die austrittsseitigen Ausnehmungen nach radial außen aus den Kühlkanälen austritt.

In der US 2 735 950 ist ein elektrischer Motor und ein Kühlverfahren beschrieben. Dabei umfasst die elektrische Maschine ein Statorblechpaket mit Rippen, durch welche Kühlkanäle gebildet werden. Durch ein durch die Kühlkanäle strömendes Kühlmittel können die Wärmeverluste im Stator abgeführt werden.

In der US 2010 0176668 A1 ist ein Stator mit einem zylindrischen Statorkern beschrieben. Der Statorkern weist dabei eine Vielzahl von Schlitzen auf, die in vorbestimmten Abständen in einer Umfangsrichtung zu einer Innenumfangsfläche des Statorkerns angeordnet sind. Ferner umfasst der Stator eine Wicklung, die einen Endabschnitt aufweist, welche von einem axialen Ende des Statorkerns hervorsteht.

Aus der DE 10 2006 005 316 A1 geht eine Kühleinrichtung für eine elektrische Maschine, insbesondere für einen Elektromotor, mit einem Stator und einem Rotor hervor. An einer Außenseite des Stators sind axial verlaufende rinnenförmige Aussparungen vorgesehen, in welche ein Kühlrohr oder ein Kühlschlauch einbringbar ist und/oder welche mittels einer Abdeckung zu einem Kühlluftkanal verschließbar sind.

In der EP 0 039 493 A2 ist eine elektrische Maschine beschrieben, welche eine Heat-Pipe in der Rotorwelle aufweist und eine Vielzahl von Lüftungsschlitzen im Stator. Während des Betriebs des Motors wird der Rotor, welcher an der Rotorwelle angeordnet ist, durch die Heat-Pipe gekühlt. Gleichzeitig wird der Stator durch einen Luftstrom, welcher durch den Stator geleitet wird, gekühlt.

Die Aufgabe der Erfindung besteht darin, die Entwärmung einfach zu gestalten.

Diese Aufgabe wird erfindungsgemäß durch den Gegenstand des unabhängigen Patentanspruchs gelöst. Vorteilhafte Weiterbildungen der Erfindung ergeben sich durch die Merkmale der abhängigen Patentansprüche.

Erfindungsgemäß wird diese Aufgabe gelöst durch eine elektrische Maschine mit einem Rotor, welcher ein Rotorblechpaket umfasst, das auf einer Welle angeordnet ist. Zudem weist die elektrische Maschine einen Stator auf, welcher ein Statorblechpaket umfasst, wobei das Statorblechpaket Kühlkanäle aufweist, welche sich axial von einem ersten axialen Ende bis zu einem gegenüberliegenden zweiten axialen Ende des Statorblechpakets erstrecken. Des Weiteren weist die elektrische Maschine eine Fördereinrichtung auf, welche dazu ausgebildet ist ein Kühlmedium axial durch die Kühlkanäle zu fördern. Schließlich umfasst die elektrische Maschine ein Gehäuse, welches das Rotorblechpaket und das Statorblechpaket umgibt. Bei dem Kühlmedium kann es sich um ein gasförmiges Kühlmedium, insbesondere Luft, handeln. Daraus ergibt sich eine einfache Anordnung einer elektrischen Maschine mit integrierten Kühlkanälen.

Erfindungsgemäß ist ein Wicklungsüberhang des Statorblechpakets mit einem Kunststoff, insbesondere Harz, umgossen. Durch den umgossenen Wicklungsüberhang ist ein Dichtelement bereitgestellt, welches einen Innenkühlkreislauf und/oder einen Rotorraum einerseits und einen Außenkühlkreislauf andererseits voneinander trennt. Der umgossene Wicklungsüberhang ist dabei durch den Außenkühlkreislauf kühlbar.

Der Wicklungsüberhang des Statorblechpakets kann mit Harz bevorzugt so umgossen werden, dass eine glatte zylinderförmige Oberfläche entsteht. Das eingepresste Statorblechpaket kann bevorzugt über die beiden Harz-Hohlzylinder den Innenraum des Stators, insbesondere den Rotor, zur Außenluft abdichten, indem er bei fertig montiertem Motor, mit dem Harz-Hohlzylinder über eine Dichtung gegen die jeweiligen Lagerschilde gedrückt wird. Das hat den Vorteil, dass der vergossene Wickelkopf durch die Außenluft direkt gekühlt werden kann. Das hat den Vorteil, dass ein zusätzlicher Innenkreislauf für die Kühlung des Wickelkopfes nicht mehr notwendig ist. Weiterhin kann das sonst notwendige Schutzrohr entfallen und die Versteifung des Wickelkopfes ist ohne zusätzliche Maßnahmen gewährleistet.

Eine Ausführungsform der Erfindung sieht vor, dass das Statorblechpaket an seinem Umfang Rippen aufweisen kann, wobei zwischen den jeweils benachbarten Rippen ein Rippengrund ausgebildet sein kann. Das Statorblechpaket kann mittels der Rippen kraftschlüssig mit dem Gehäuse verbunden und zugleich kann ein jeweiliger Kühlkanal zwischen jeweils benachbarten Rippen, dem Gehäuse und dem jeweiligen Rippengrund ausgebildet sein. Mit anderen Worten kann das Statorblechpaket mittels einer Presspassung in das Gehäuse, welches beispielsweise aus Gusseisen oder Stahl bestehen kann, eingepresst sein.

Das hat den Vorteil, dass durch die Passung das mechanische Drehmoment gleichmäßig von dem Statorblechpaket zum Gehäuse übertragen werden kann, ohne dass zusätzliche Stützvorrichtungen für das Statorblechpaket notwendig sind. Mit anderen Worten entsteht beim Übereinanderlegen der einzelnen Statorbleche ein zylinderförmiges Statorblechpaket, das am Umfang Rippen in axialer Richtung aufweist, wobei das Gehäuse, welches durch eine Presspassung mit dem Statorblechpaket verbunden ist ebenfalls eine zylindrische Form aufweist. Das hat den Vorteil, dass über die Passung Wärme aus den Rippenspitzen in das Gehäuse übertragen werden kann. Weiterhin hat das eingepresste außenverrippte Statorblechpaket den Vorteil, dass eine effizientere Kühlung erreicht werden kann, da das Blechpaket direkt gekühlt wird. Durch das Gehäuse entstehen zusammen mit den Rippen am Blechpaket geschlossene Kanäle, die zum einen die Luft besser führen und zum anderen mehr wärmeabgebende Oberfläche schaffen.

In vorteilhafter Weise kann eine Berührungsfläche, die zwischen dem Gehäuse und jeweils einer Rippe ausgebildet ist, auf einem Kreis angeordnet sein. Mit Berührungsfläche ist hier die Fläche gemeint, an denen sich die Innenflächen des Gehäuses mit der Rippenfläche, welche sich axial erstreckt, berühren. Daraus ergibt sich der Vorteil, dass über die Passung Wärme aus den Rippen in das Gehäuse übertragen wird.

Eine weitere Ausführungsform der Erfindung sieht vor, dass das Statorblechpaket im mindestens einen Rippengrund formschlüssig und/oder stoffschlüssig zusammengehalten ist, insbesondere geklammert und/oder geschweißt ist. Daraus ergibt sich der Vorteil, dass das Statorblechpaket eine hohe Stabilität aufweist, d.h. eigensteif ist.

In vorteilhafter Weise können die Rippen im Rippengrund eine Rastvorrichtung aufweisen. Dabei kann die Rastvorrichtung mittels der Rippenform gebildet sein. Mit anderen Worten ist z.B. an der rechten und linken Seitenfläche der Rippe eine Wölbung ausgebildet, welche in den Kühlkanal hineinragen. Eine weitere Ausführungsform der Erfindung sieht vor, dass zumindest auf einem Rippengrund ein Kühlrohr zum Fördern von Kühlflüssigkeit angeordnet ist. Durch die Rastvorrichtung können die Kühlrohre auf einfache Art und Weise im Kühlkanal fixiert werden. Mit anderen Worten können die Kühlrohre z.B. eingeklipst werden, d.h. die Kühlrohre werden durch radiales Nachdrücken fixiert, so dass sie in die Rastvorrichtung einrasten. In vorteilhafter Weise können die Kühlrohre auch in den Rippengrund eingewalzt werden. Dabei können die Rohre durch ein Einwalzgerät aufgeweitet werden, so dass ein Presssitz und damit eine Verbindung entsteht. Das hat den Vorteil, dass die Umsetzung einer wassergekühlten elektrischen Maschine lediglich durch den Einbau von Kühlrohren möglich ist. Somit kann der Radius des Kühlkanalrohres dem Radius der Kühlkanalkontur am Rippengrund entsprechen. Daraus ergibt sich der Vorteil, dass eine verbesserte Wärmeübertragung erfolgen kann.

In einer weiteren Ausführungsform kann der Stator eine Statorwicklung mit einem Wicklungsüberhang, einem so genannten Wickelkopf, aufweisen, welcher an dem ersten axialen Ende des Statorblechpakets in einen ersten Wickelkopfraum und an dem gegenüberliegenden zweiten axialen Ende in einen axial gegenüberliegenden zweiten Wickelkopfraum hineinragt, wobei der erste und der zweite Wickelkopfraum über die Kühlkanäle fluidisch gekoppelt sind. Der erste Wickelkopfraum kann zwischen der Fördereinrichtung, insbesondere einem Lüfter, und den Kühlkanälen angeordnet sein, wobei die elektrische Maschine dazu ausgelegt sein kann, mittels der Fördereinrichtung, das Kühlmedium durch den ersten Wickelkopfraum, durch die Kühlkanäle und durch den zweiten Wickelkopfraum zu fördern. Mit anderen Worten kann die elektrische Maschine einen ersten Wickelkopfraum, welcher auf der Nicht-Antriebs-Seite angeordnet sein kann, und einen zweiten Wickelkopfraum, welcher axial gegenüber dem ersten Wickelkopfraum, d.h. auf der Antriebs-Seite, angeordnet sein kann, aufweisen. In den ersten und den zweiten Wickelkopfraum kann ein Wicklungsüberhang der Statorwicklung hineinragen. Bei dem Lüfter kann es sich Eigenlüfter der elektrischen Maschine handeln, der an der Welle an der elektrischen Maschine z.B. am ersten axialen Ende des Rotors, z.B. an der Nicht-Antriebs-Seite, angeordnet und durch die Welle angetrieben sein kann. Alternativ zur Verwendung eines Eigenlüfters kann ein Fremdlüfter eingesetzt werden, welcher am Statorende angeordnet sein kann und die Wickelköpfe anströmt.

Das Kennzeichen, dass eine elektrische Maschine einen umgossenen Wicklungsüberhang aufweist, stellt einen unabhängigen Aspekt der vorliegenden Erfindung dar. Somit umfasst die Erfindung auch eine elektrische Maschine, aufweisend:
- einen Rotor, welcher ein Rotorblechpaket umfasst, das auf einer Welle angeordnet ist;
- einen Stator, welcher ein Statorblechpaket umfasst, wobei das Statorblechpaket Kühlkanäle aufweist, welche sich axial von einem ersten axialen Ende bis zu einem gegenüberliegenden zweiten axialen Ende des Statorblechpakets erstrecken;
- eine Fördereinrichtung, welche dazu ausgebildet ist, ein Kühlmedium axial durch die Kühlkanäle zu fördern; und
- ein Gehäuse, welches das Rotorblechpaket und das Statorblechpaket umgibt, wobei ein Wicklungsüberhang des Statorblechpakets mit einem Kunststoff, insbesondere Harz, umsen ist, wobei durch den umgossenen Wicklungsübergang ein Dichtelement bereitgestellt ist, welches einen Innenkühlkreislauf und/oder einen Rotorraum einerseits und einen Außenkühlkreislauf der elektrischen Maschine andererseits voneinander trennt.

Mit Rotorraum ist hier der Raum gemeint, welcher sich zwischen Lagerschild und Rotor erstreckt. Das hat den Vorteil, dass der vergossene Wickelkopf direkt durch den Außenkühlkreislauf gekühlt werden kann. Zudem kann über den Harz-Hohlzylinder, also den vergossenen Wickelkopf, Wärme aus dem Rotorraum an den Außenkühlluftkreis abgegeben werden.

Eine weitere Ausführungsform der Erfindung sieht vor, dass die Welle als Thermosiphon ausgestaltet sein kann. Der Thermosiphon weist im Bereich des Rotors ein warmes Ende und im Bereich des Lüfters ein kaltes Ende auf. Mit anderen Worten ist in die Welle ein axial verlaufender Kanal integriert, welcher hermetisch abgeschlossen ist und in welchem ein Kühlmittel zirkuliert. Das kalte Ende des Thermosiphons außerhalb des Rotors kann zwischen einem Lüfter und Kühlkanälen des Stators ausgebildet sein. In einer weiteren Ausführungsform kann sich der kalte Bereich des Thermosiphons ausgehend von dem Lüfter entlang der Nicht-Antriebsseite erstrecken, d.h. der rotorabgewandten Seite, oder der Lüfter kann derart ausgebildet sein, dass das kalte Ende des Thermosiphons, in diejenige Fläche, welche die Lüfterschaufel ausbildet, nahtlos übergeht. Der Thermosiphon kann an einem Ende eine konische Form aufweisen, wie es z.B. in der DE 10 2007 043 656 A1 gezeigt ist.

In vorteilhafter Weise kann in dem Thermosiphon ein Kühlmittel, insbesondere Wasser, bereit gestellt sein. Mit anderen Worten kann ein Kühlmittel zur Zirkulation bereit gestellt werden, welches zunächst die Verlustwärme des Rotors aufnimmt, dabei verdampft und am kalten Ende des Thermosiphons, dem Kondensatorteil, diese Verlustwärme beispielsweise an die Umgebung abgibt. Mit anderen Worten kann das verbaute Thermosiphon die Wärme des Rotorblechpakets aus dem Rotor abführen. Das hat den Vorteil, dass auf einen inneren Luftkühlkreislauf verzichtet werden kann. Dies führt auch zum Wegfall der Überstromkanäle und dadurch zur Vereinfachung des Gehäuses.

Im Folgenden sind Ausführungsbeispiele der Erfindung beschrieben. Es zeigen:
- FIG 1: eine schematische Darstellung eines Querschnitts einer Ausführungsform der erfindungsgemäßen elektrischen Maschine;
- FIG 2: eine schematische Darstellung einer elektrischen Maschine mit gekühlten Ständer- und Läuferblechpaketen und Wicklungen;
- FIG 3: eine schematische Schnittdarstellung eines Ausschnittes des Statorblechpakets mit Klammern oder Schweißnaht;
- FIG 4: eine schematische Schnittdarstellung des Statorblechpakets mit Rippen, Gehäuse und den darin ausgebildeten Kühlkanälen;
- FIG 5: eine schematische Schnittdarstellung des Statorblechpakets mit Rippen und einer Rastvorrichtung; und
- FIG 6: eine schematische Schnittdarstellung des Statorblechpakets mit Rippen und Kühlrohren im Rippengrund.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsform jeweils einzelne, unabhängig voneinander betrachtende Merkmale dar, welche die Erfindung jeweils auch unabhängig voneinander weiterbilden und damit auch einzeln oder in einer als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

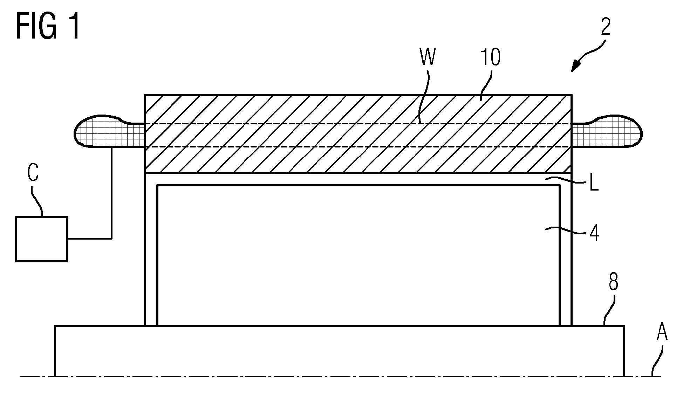

In FIG 1 ist ein allgemeiner Aufbau einer elektrischen Maschine dargestellt. Gezeigt ist eine elektrische Maschine 2, bei der es sich um die erfindungsgemäße elektrische Maschine handeln kann. Die elektrische Maschine 2 kann eine Asynchronmaschine oder eine Synchronmaschine sein. In FIG 1 stellt eine Rotationsachse A auch eine Symmetrieachse der Darstellung dar. Die elektrische Maschine 2 umfasst einen Stator 10, in welchem Wicklungen W elektrischer Spulen angeordnet sind, wobei in FIG 1 nur eine der Wicklungen W dargestellt ist. Die Wicklungen W werden durch ein Drehstromquelle C abwechselnd bestromt, wodurch im Inneren des Stators 10 ein magnetisches Drehfeld in einem Luftspalt L der elektrischen Maschine 2 entsteht. Die Drehstromquelle C kann beispielsweise ein gesteuerter Wechselrichter oder ein festfrequentes öffentlicher elektrisches Versorgungsnetz oder ein Frequenzumrichter sein. Im Inneren des Stators 10 befindet sich ein Rotor 4, der drehfest mit einer Welle 8 verbunden ist. Die Welle 8 ist um die Rotationsachse A drehbar in dem Stator 10 gelagert.

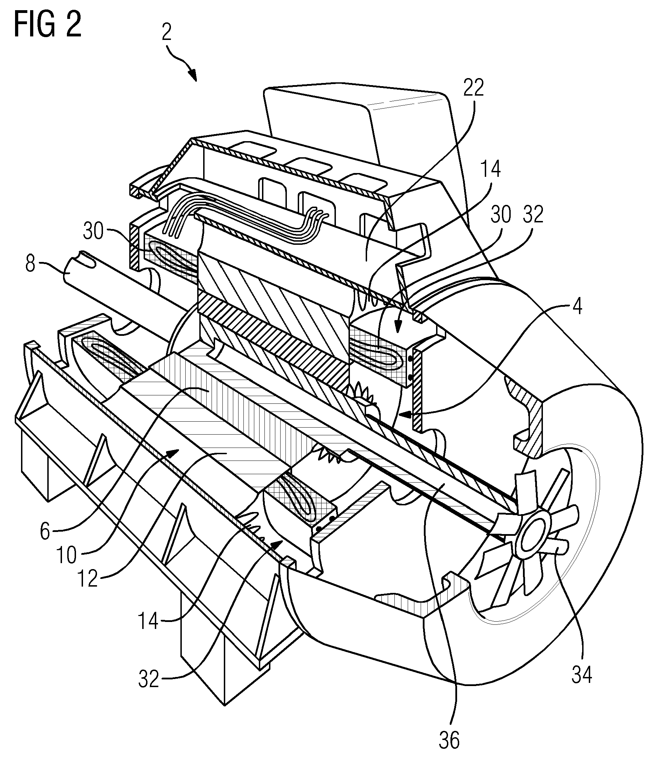

In FIG 2 bis FIG 4 ist die elektrische Maschine 2 genauer dargestellt. Bei der elektrischen Maschine 2 kann es sich beispielsweise um einen Motor oder Generator handeln. Die elektrische Maschine 2 weist unter anderem eine Welle 8, einen Rotor 4 mit Rotorblechpaket 6 und einen Stator 10 mit einem Statorblechpaket 12 auf. An einem Ende der Welle 8, bevorzugt auf der Nicht-Antriebs-Seite, kann eine Fördereinrichtung 34, insbesondere ein Lüfter 34, angeordnet sein. An seinem Umfang weist der Stator 10 sich axial erstreckende Rippen 14 auf, wobei zwischen den jeweils benachbarten Rippen 14 ein Rippengrund 16 ausgebildet ist. Zudem weist der Stator 10 eine Statorwicklung mit einem Wicklungsüberhang 30 auf, welcher in einen ersten Wickelkopfraum 32 und in einem, dem ersten Wickelkopfraum 32 axial gegenüberliegenden zweiten Wickelkopfraum hineinragt. Das Rotorblechpaket 6 und das Statorblechpaket 12 sind dabei von einem Gehäuse 22 umgeben, wobei das Statorblechpaket 12 mittels der Rippen 14 kraftschlüssig mit dem Gehäuse 22 verbunden ist. Zwischen den Rippen 14, dem Gehäuse 22 und dem jeweiligen Rippengrund 16 ist ein Kühlkanal 24 ausgebildet.

Für die luftgekühlte elektrische Maschine 2 weisen Lagerschilde Öffnungen in axialer Richtung auf. Beispielsweise fördert die Fördereinrichtung z.B. der Lüfter 34 auf der Nicht-Antriebs-Seite Kühlluft durch die Öffnungen im Lagerschild, über den Wicklungsüberhang 30, welcher an dem ersten axialen Ende des Statorblechpakets 12 in den ersten Wickelkopfraum hineinragt, durch die Kühlkanäle 24, über den zweiten Wicklungsüberhang 30, welcher an dem zweiten axialen gegenüberliegenden Ende des Statorblechpakets 12 in den zweiten Wickelkopfraum hineinragt, und anschließend durch das abtriebsseitige Lagerschild. Wie in FIG 2 dargestellt, kann die Welle 8 als Thermosiphon 36 ausgestaltet sein, indem in die Welle 8 ein axial verlaufender Kühlkanal integriert ist, in welchem ein Kühlmittel, insbesondere Wasser, zirkuliert. Mit dem Thermosiphon 36 kann die Abwärme des Rotors 4 durch den Lagerschild hindurch abgeführt werden.

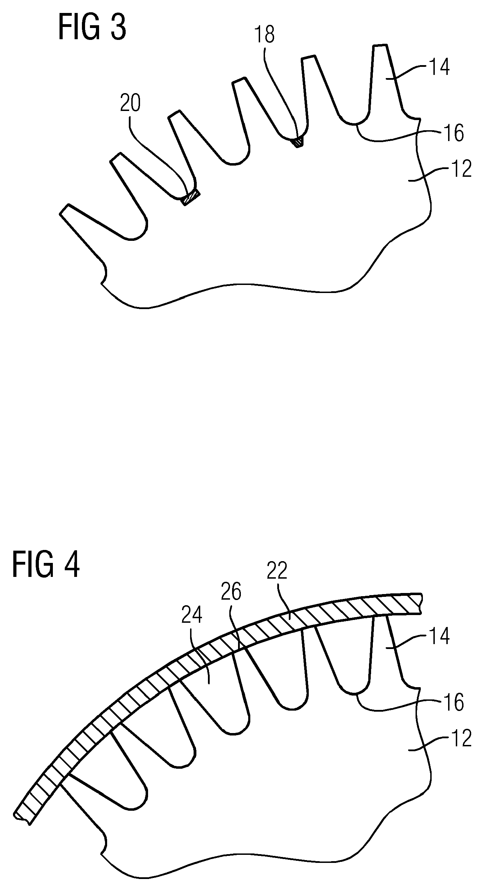

In FIG 3 ist eine schematische Schnittdarstellung eines Ausschnittes des Statorblechpakets 12 mit Klammern oder Schweißnaht dargestellt. Zur Stabilisierung des Statorblechpakets 12 ist das Statorblechpaket 12 im Rippengrund 16 geklammert 20 und/oder geschweißt 18.

In FIG 4 ist eine schematische Schnittdarstellung des Statorblechpakets 12 mit Rippen 14, Gehäuse 22 und dem ausgebildeten Kühlkanal 24 dargestellt. Durch das Gehäuse 22 entstehen zusammen mit den Rippen 14 am Statorblechpaket 12 geschlossene Kühlkanäle 24, durch die ein Kühlmittel geführt werden kann.

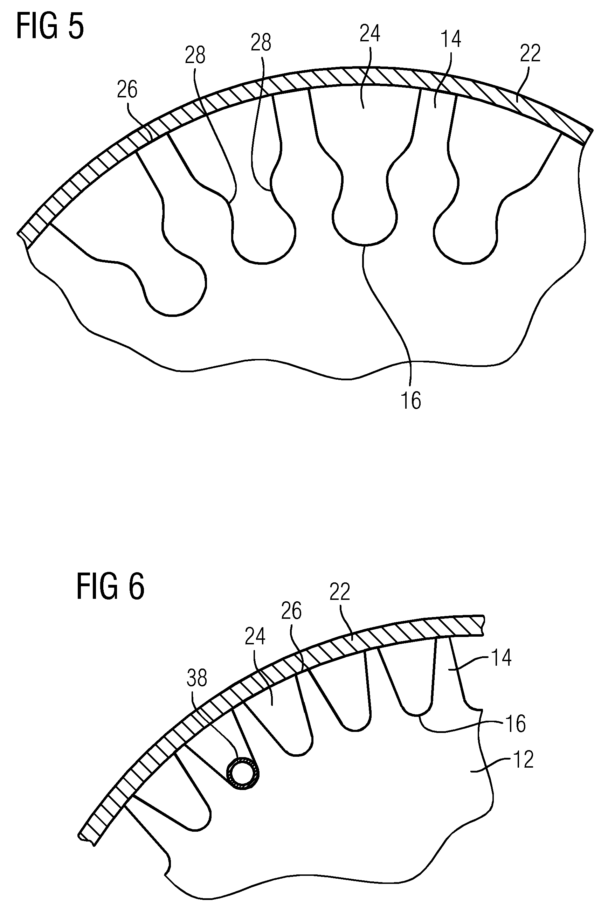

FIG 5 stellt eine schematische Schnittdarstellung des Statorblechpakets 12 mit Rippen 14 und einer Rastvorrichtung 28 dar. Diese Rastvorrichtung 28 ist mittels der Rippenform gebildet. FIG 6 zeigt eine schematische Schnittdarstellung des Statorblechpakets 12 mit in den Rippengrund 16 vorgesehenen

Kühlkanälen 24. Die Rastvorrichtung 28 entsteht insbesondere durch die Rippenkontur. Wie in FIG 5 dargestellt, ist an der rechten und linken Seitenfläche der Rippe 14 jeweils eine Erhebung oder Wulst ausgebildet, welche in den Kühlkanal 24 hineinragt. Durch die Rastvorrichtung 28 können Kühlrohre 38 im Kühlkanal 24 fixiert werden, durch welche ein Kühlmittel, insbesondere Wasser, gefördert werden kann. Mit anderen Worten können die Kühlrohre 38 hineingeklipst werden, d.h. die Kühlrohre 38 werden durch radiales Nachdrücken fixiert, indem sie in die Rastvorrichtung 28 einrasten. In FIG 6 sind die Kühlrohre 38 in den Rippengrund 16 beispielsweise eingewalzt. Dabei werden die Kühlrohre 38 beispielsweise durch ein Einwalzgerät aufgeweitet, so dass ein Presssitz und damit eine Verbindung entsteht.

Insgesamt geht somit eine elektrische Maschine mit einem Statorblechpaket aus der Erfindung hervor, welches am äußeren Umfang eine zackenförmige Kontur aufweist. Beim Übereinanderlegen der einzelnen Statorbleche entsteht ein zylinderförmiges Blechpaket, das am Umfang Rippen in axialer Richtung aufweist. Das Statorblechpaket kann im Rippengrund geklammert, geschweißt oder anders zusammengehalten werden. In den Rippengrund können bei wassergekühlter Ausführung Kühlrohre eingeschweißt werden. Für die luftgekühlte Ausführung bleibt der Rippengrund frei.

Das Statorblechpaket kann mittels Presspassung in das Ständergehäuse eingepresst werden. Durch die Passung wird das Moment von dem Aktivteil zum Gehäuse übertragen. Weiterhin wird über die Passung Wärme aus den Rippenspitzen in das Gehäuse übertragen. Der Wicklungsüberhang des Statorblechpakets kann mit Harz vergossen sein, so dass eine glatte zylinderförmige Oberfläche entsteht. Die Länge des Harz-Hohlzylinders ist abhängig von der Länge des Blechpakets und des Gehäuses. Der eingepresste Aktivteil dichtet über die beiden Harz-Hohlzylinder den Innenraum des Aktivteils zur Außenluft ab, indem er, bei fertig montierten Motor, mit dem Harz-Hohlzylinder über eine Dichtung gegen die jeweiligen Lagerschilde drückt. Ein Thermosiphon führt die Läuferverluste in Form von Wärme ab. Für luftgekühlte Maschinen wird die Wärme an den Lüfter geleitet, welcher gleichzeitig der Lüfter für den Außenkreislauf und Wärmetauscher für die Läufer-Entwärmung ist. Bei wassergekühlten Maschinen kann der Lüfter entfallen. Für luftgekühlte Maschinen weisen die Lagerschilde Öffnungen in axialer Richtung auf. Der Lüfter auf der Nicht-Antriebs-Seite (wellenfest oder fremdbetrieben) fördert die Luft durch die Öffnung im Lagerschild, über den vergossenen Wickelkopf, durch die Kanäle aus den Blechpaketrippen und Gehäuse, über den zweiten vergossenen Wickelkopf und anschließend durch das abtriebsseitige Lagerschild.

Das eingepresste außen verrippte Blechpaket führt zu einer effizienteren Kühlung, da das Blechpaket direkt gekühlt wird. Durch das Gehäuse entstehen zusammen mit den Rippen am Blechpaket geschlossene Kanäle, die zum einen die Luft besser führen und zum anderen mehr wärmeabgebende Oberfläche schaffen. Durch die Anordnung des vergossenen Wickelkopfs kann dieser durch die Außenluft direkt gekühlt werden. Der Innenkreislauf ist für die Kühlung des Wickelkopfes nicht mehr nötig. Das sonst nötige Schutzrohr kann entfallen und die Versteifung des Wickelkopfes ist ohne zusätzliche Maßnahmen gewährleistet. Das im Läufer verbaute Thermosiphon führt die Luft des Läuferaktivteils aus dem Motor zum Lüfter ab. Auf einen inneren Luftkühlkreislauf kann komplett verzichtet werden. Dies führt auch zum Wegfall der Überstromkanäle und dadurch zur Vereinfachung des Gehäuses.

Insgesamt ist durch die Beispiele gezeigt, wie das Konzept zur effizienten Entwärmung einer elektrischen Maschine funktioniert.

## Patentansprüche

1. Elektrische Maschine (2) umfassend:
- einen Rotor (4), welcher ein Rotorblechpaket (6) umfasst, das auf einer Welle (8) angeordnet ist;
- einen Stator (10), welcher ein Statorblechpaket (12) umfasst, wobei das Statorblechpaket (12) Kühlkanäle (24) aufweist, welche sich axial von einem ersten axialen Ende bis zu einem gegenüberliegenden zweiten axialen Ende des Statorblechpakets (12) erstrecken;
- eine Fördereinrichtung (34), welche dazu ausgebildet ist, ein Kühlmedium axial durch die Kühlkanäle (24) zu fördern; und
- ein Gehäuse (22), welches das Rotorblechpaket (6) und das Statorblechpaket (12) umgibt,
**dadurch gekennzeichnet, dass**
ein Wicklungsüberhang des Statorblechpakets (12) mit einem Kunststoff, insbesondere Harz, umgossen ist, wobei durch den umgossenen Wicklungsüberhang (30) ein Dichtelement bereitgestellt ist, welches einen Innenkühlkreislauf und/oder einen Rotorraum einerseits und einen Außenkühlkreislauf andererseits voneinander trennt, wobei der umgossenen Wicklungsüberhang (30) durch den Außenkühlkreislauf kühlbar ist.

2. Elektrische Maschine (2) nach Anspruch 1, wobei das Statorblechpaket (12) an seinem Umfang Rippen (14) aufweist, wobei zwischen jeweils benachbarten Rippen (14) ein Rippengrund (16) ausgebildet ist und wobei das Statorblechpaket (12) mittels der Rippen (14) kraftschlüssig mit dem Gehäuse (22) verbunden ist und ein jeweiliger Kühlkanal (24) zwischen jeweils benachbarten Rippen (14), dem Gehäuse (22) und dem jeweiligen Rippengrund (16) ausgebildet ist.

3. Elektrische Maschine (2) nach Anspruch 1 oder 2, wobei eine Berührungsfläche (26), die zwischen dem Gehäuse (22) und den Rippen (14) ausgebildet ist, auf einem Kreis angeordnet ist.

4. Elektrische Maschine (2) nach einem der vorhergehenden Ansprüche, wobei das Statorblechpaket (12) im mindestens einen Rippengrund (16) formschlüssig und/oder stoffschlüssig zusammengehalten ist, insbesondere geklammert und/oder geschweißt ist.

5. Elektrische Maschine (2) nach einem der vorhergehenden Ansprüche, **dadurch gekennzeichnet, dass** die Rippen (14) im Rippengrund (16) eine Rastvorrichtung (28) aufweisen.

6. Elektrische Maschine (2) nach Anspruch 5, wobei die Rastvorrichtung (28) mittels der Rippenform gebildet ist.

7. Elektrische Maschine (2) nach einem der vorhergehenden Ansprüche, wobei der Stator (10) eine Statorwicklung mit einem Wicklungsüberhang (30) aufweist, welcher an dem ersten axialen Ende des Statorblechpakets (12) in einen ersten Wickelkopfraum (32) und an dem gegenüberliegenden zweiten axialen Ende in einen axial gegenüberliegenden zweiten Wickelkopfraum hineinragt, wobei der erste und der zweite Wickelkopfraum über die Kühlkanäle (24) fluidisch gekoppelt sind, wobei der erste Wickelkopfraum (32) zwischen der Fördereinrichtung (34), insbesondere einem Lüfter (34), und den Kühlkanälen (24) angeordnet ist und wobei die elektrische Maschine (2) dazu ausgelegt ist, mittels der Fördereinrichtung (34), das Kühlmedium durch den ersten Wickelkopfraum (32), durch die Kühlkanäle (24) und durch den zweiten Wickelkopfraum zu fördern.

8. Elektrische Maschine (2) nach einem der vorhergehenden Ansprüche, **dadurch gekennzeichnet, dass** die Welle (8) als Thermosiphon (36) ausgestaltet ist.

9. Elektrische Maschine (2) nach Anspruch 8, wobei in dem Thermosiphon (36) ein Kühlmittel, insbesondere Wasser, bereitgestellt ist.

10. Elektrische Maschine (2) nach einem der vorhergehenden Ansprüche, wobei zumindest auf einem Rippengrund (16) ein Kühlrohr (38) zum Fördern von Kühlflüssigkeit angeordnet ist.

## Claims

1. Electric machine (2) comprising:
- a rotor (4), which comprises a rotor laminate core (6), which is arranged on a shaft (8);
- a stator (10), which comprises a stator laminate core (12), wherein the stator laminate core (12) has cooling ducts (24), which extend axially from a first axial end to an opposing second axial end of the stator laminate core (12);
- a conveyor (34) which is embodied to convey cooling medium axially through the cooling ducts (24); and
- a housing (22), which surrounds the rotor laminate core (6) and the stator laminate core (12),
**characterised in that**
a winding overhang of the stator laminate core (12) is cast with a plastic, in particular resin, wherein a sealing element is provided by the cast winding overhang (30), said sealing element separating an internal cooling circuit and/or a rotor chamber on the one hand and an external cooling circuit on the other hand from one another, wherein the cast winding overhang (30) can be cooled by the external cooling circuit.

2. Electric machine (2) according to claim 1, wherein the stator laminate core (12) has ribs (14) on its periphery, wherein a rib base (16) is embodied between each adjacent rib (14) and wherein the stator laminate core (12) is connected in a force-fit manner with the housing (22) by means of the ribs (14) and a respective cooling duct (24) is embodied between the adjacent ribs (14), the housing (22) and the respective rib base (16) in each case.

3. Electric machine (2) according to claim 1 or 2, wherein a contact surface (26), which is embodied between the housing (22) and the ribs (14), is arranged on a circuit.

4. Electric machine (2) according to one of the preceding claims, wherein the stator laminate core (12) is held together, in particular clamped and/or welded in a form-fit and/or positive-fit manner in at least one rib base (16).

5. Electric machine (2) according to one of the preceding claims, **characterised in that** the ribs (14) in the rib base (16) have a locking apparatus (28).

6. Electric machine (2) according to claim 5, wherein the locking apparatus (28) is formed by means of the rib shape.

7. Electric machine (2) according to one of the preceding claims, wherein the stator (10) has a stator winding with a winding overhang (30), which, at the first axial end of the stator laminate core (12), protrudes into a first winding head space (32) and at the opposing second axial end protrudes into an axially opposing second winding head space, wherein the first and the second winding head space are fluidically coupled by way of the cooling ducts (24), wherein the first winding head space (32) is arranged between the conveyor (34), in particular a fan (34), and the cooling ducts (24), and wherein the electric machine (2) is designed to convey the cooling medium through the first winding head space (32), through the cooling ducts (24) and through the second winding head space by means of the conveyor (34).

8. Electric machine (2) according to one of the preceding claims, **characterised in that** the shaft (8) is embodied as a thermosiphon (36).

9. Electric machine (2) according to claim 8, wherein a coolant, in particular water, is provided in the thermosiphon (36).

10. Electric machine (2) according to one of the preceding claims, wherein a cooling pipe (38) for conveying cooling liquid is arranged at least on one rib base (16).

## Revendications

1. Machine (2) électrique comprenant :
- un rotor (4) qui comprend un paquet (6) de tôles rotoriques monté sur un arbre (8),
- un stator (10) qui comprend un paquet (12) de tôles statoriques, le paquet (12) de tôles statoriques ayant des canaux (24) de refroidissement qui s'étendent axialement d'une première extrémité axiale à une deuxième extrémité axiale opposée du paquet (12) de tôles statoriques,
- un dispositif (34) de refoulement, qui est constitué pour refouler un fluide de refroidissement axialement dans les canaux (24) de refroidissement et
- une enveloppe (22) qui entoure le paquet (6) de tôles rotoriques et le paquet (12) de tôles statoriques, **caractérisé en ce que**
un surplomb d'enroulement du paquet (12) de tôles statoriques est entouré par coulée d'une matière plastique, notamment d'une résine, le surplomb (30) d'enroulement coulé procurant un élément d'étanchéité qui sépare l'un de l'autre un circuit de refroidissement intérieur et/ou un espace rotorique, d'une part, et un circuit de refroidissement extérieur, d'autre part, le surplomb (30) d'enroulement coulé pouvant être refroidi par le circuit de refroidissement extérieur.

2. Machine (2) électrique suivant la revendication 1, dans laquelle le paquet (12) de tôles rotoriques a sur son pourtour des nervures (14), un fond (16) de nervure étant constitué entre des nervures (14) voisines et le paquet (12) de tôles statoriques est relié à l'enveloppe (12) à complémentarité de force au moyen des nervures (14) et un canal (24) de refroidissement est constitué entre des nervures (14) voisines, l'enveloppe (22) et le fond (16) de nervure.

3. Machine (2) électrique suivant la revendication 1 ou 2, dans laquelle une surface (26) de contact qui est constituée entre l'enveloppe (22) et les nervures (14) est disposée sur un cercle.

4. Machine (2) électrique suivant l'une des revendications précédentes, dans laquelle le paquet (12) de tôles statoriques est maintenu ensemble par complémentarité de forme et/ou par complémentarité de matière dans au moins un fond (16) de nervure, en étant notamment cramponné et/ou soudé.

5. Machine (2) électrique suivant l'une des revendications précédentes, **caractérisée en ce que** les nervures (14) ont dans le fond (16) de nervure un dispositif (28) d'encliquetage.

6. Machine (2) électrique suivant la revendication 5, dans laquelle le dispositif (28) d'encliquetage est formé au moyen de la forme des nervures.

7. Machine (2) électrique suivant l'une des revendications précédentes, dans laquelle le stator (10) a un enroulement statorique ayant un surplomb (30) d'enroulement, qui pénètre à la première extrémité axiale du paquet (12) de tôles statoriques dans un espace (32) de tête de bobine et à la deuxième extrémité axiale opposé dans un deuxième espace de tête de bobine opposé axialement, le premier et le deuxième espaces de tête de bobine communiquant fluidiquement par les canaux (24) de refroidissement, le premier espace (32) de tête de bobine étant disposé entre le dispositif (34) de refoulement, notamment un ventilateur (34), et les canaux (24) de refroidissement et la machine (2 électrique étant conçue pour refouler à l'aide du dispositif (34) de refoulement le fluide de refroidissement dans le premier espace (32) de tête de bobine, dans les canaux (24) de refroidissement et dans le deuxième espace de tête de bobine.

8. Machine (2) électrique suivant l'une des revendications précédentes, **caractérisée en ce que** l'arbre (8) est conformé en thermosiphon (36).

9. Machine (2) électrique suivant la revendication 8, dans laquelle le thermosiphon (36) met à disposition un fluide de refroidissement, notamment de l'eau.

10. Machine (2) électrique suivant l'une des revendications précédentes, dans laquelle un tuyau (38) de refroidissement pour refouler du liquide de refroidissement est disposé au moins sur un fond (16) de nervure.
